# EUROPEAN PATENT APPLICATION

(11) **EP 4 521 536 A1**
(43) Date of publication of application: **12.03.2025**
(21) Application number: 24198763.5
(22) Date of filing: 05.09.2024
(51) Int. Cl.: H01M 50/308, H01M 50/317, H01M 50/30

(54) **A VALVE ASSEMBLY**

(30) Priority: 05.09.2023 EP 23195506
(71) Applicant: Illinois Tool Works Inc., Glenview IL 60025 (US)
(72) Inventor: YON, Fulvio Pacifico, Glenview, Illinois 60025 (US); BUILLAS, Lara, Glenview, Illinois 60025 (US); BARBERIS, Andrea, Glenview, Illinois 60025 (US)
(74) Representative: HGF

(57) **Abstract**

The present invention provides for a valve assembly (100) for an BEV, comprising: a first valve member (102) and a second valve member (104); a housing (106), comprising a (substantially) tubular wall structure (108) extending between an open top end portion (110) and an open bottom end portion (112) along a central axis, configured to operably retainingly receive said first and second valve member (102, 104) in an adjacent and parallel arrangement between said top end portion (110) and said bottom end portion (112); a cover member (116), operably mountable to said top end portion (110), configured to cover said first valve member (102) and said second valve member (104) and provide at least one fluid passage (118) through said open top end portion (110), and a fastener member (120), provided at said bottom end portion (112), configured to demountably fasten said housing (106) to a carrier panel (10) through an aperture (12) of the carrier panel (10).

## Description

### Technical Field of Invention

The invention relates generally to valve assemblies, and in particular to valves for batteries of BEVs (Battery Electric Vehicles). Even more particularly, the present invention relates to a removably mountable valve assembly with at least a breathing valve and a degassing valve for BEVs.

### Background

The transition towards e-mobility brings new challenges to vehicle design in respect to pressure equalization. Hermetically sealed housing of lithium-ion batteries for vehicles must be equipped with special pressure equalization devices, because, liquid electrolyte, which is currently used in nearly all lithium-ion cells, evaporates and can escape into the battery housing as a hot gas. This must then be released into the environment very rapidly and in a controlled process through a pressure relief valve (degassing). At the same time, every battery housing needs controlled venting anyway to compensate for fluctuating air pressure during normal operation. This is necessary not only when driving uphill and downhill but also because the air in the housing heats up during power input and output (breathing). This keeps the pressure and temperature inside the battery case low and helps to prevent a thermal runaway propagation.

Often, the pressure compensation during normal operation and pressure reduction with an emergency gas release is combined into one assembly unit. This can be realised by a single mechanism integrating the two different valve functions, or by a simple combination of two separate valve units. The installation of such valve assemblies can often be technically demanding, especially, when operably mounting the valve units to the housing of a battery, e.g. with typical fasteners (screws, rivets etc.). Also, during the installation of such valve assemblies, the units may be damaged or mounted incompletely, allowing for potential damage at a later stage.

Accordingly, it is an object of the present invention to provide a valve assembly with improved ease of use during installation and allowing for simple removal for a replacement in the event of damage. Furthermore, it is an object of the present invention to provide for a valve assembly capable of providing an improved indication of correct and secure installation to a suitable carrier panel of a battery housing.

### Summary of the Invention

Aspects of the invention are set out in the independent claim(s). Dependent claims describe the optional features.

According to a first aspect of the invention, there is provided a valve assembly for an BEV, comprising:
a first valve member and a second valve member;
a housing, comprising a tubular wall structure extending between an open top end portion and an open bottom end portion along a central axis, configured to operably retainingly receive said first and second valve member in an adjacent and parallel arrangement between said top end portion and said bottom end portion;
a cover member, operably mountable to said top end portion, configured to cover said first valve member and said second valve member and provide at least one fluid passage through said open top end portion;
a fastener member, provided at said bottom end portion, configured to demountably fasten said housing to a carrier panel through an aperture of the carrier panel.

Advantageously, the tubular wall structure comprises a pair of opposing first side walls and a pair of opposing second side walls arranged so as to form an oblong tubular cross-section adapted to enclose said first and second valve member. Preferably, said oblong tubular cross section is correspondingly formed to the shape of the aperture of the carrier panel. Even more preferably, each one of said opposing first side walls is arcuate about said centre axis of said housing.

Advantageously, said fastener member comprises a twist-lock mechanism, configured to lockingly engage with the carrier panel through the aperture.

This provides the advantage that the oblong valve assembly can be easily mounted to a suitably shaped aperture of a carrier panel of a BEV battery, i.e. by a simple push and twist movement. The simple twist-lock mount provides for a secure coupling between the valve housing and the carrier panel operably locking the housing of the valve assembly into the aperture of the carrier panel, while allowing for unlocking and removal of the valve assembly with a simple twist and pull movement. In addition, the oblong design of the housing, as well as, the angular offset between the orientation of the valve housing and the carrier panel aperture when inserting the valve assembly into the aperture of the carrier panel before twisting the valve assembly into its locking position, provides for a very simple but effective indicator for a correct installation of the valve assembly.

Advantageously, the fastener assembly comprises a pair of first latching elements protruding from an inner surface of a respective one of said pair of first side walls towards and past said bottom end portion, each one of said pair of first latching elements is adapted to contactingly engage with a bottom surface of a respective lug element protruding into the aperture of the carrier panel, during use. Preferably, said fastener assembly further comprises a pair of second latching elements, protruding from an inner support member that is provided between said top end portion and said bottom end portion and that is adapted to mountingly receive said first and second valve member, each one of said pair of second latching elements is adapted to contactingly engage with a bottom surface of said carrier panel, during use. Even more preferably, each one of said pair of second latching elements is arranged substantially central to and spaced apart from a respective one of said pair of opposing second side walls.

Advantageously, when inserted through the aperture, said fastener member is adapted to rotatably move about said centre axis between an unlocked position, where said first and second latching elements are mountably disengaged from the carrier panel, and a locked position, where said first and second latching elements are mountably engaged with the carrier panel. Preferably, said pair of first latching elements and said pair of second latching elements are configured to simultaneously engage with said lug elements and the bottom surface of the carrier panel, respectively, when moving from said unlocked position into said locked position.

Advantageously, each one of said first latching elements is a resilient snap-fit latch configured to matingly engage with the respective lug element of the carrier panel, and wherein each one of said second latching elements is an abutment element configured to slidingly move into contact engagement with the bottom surface of the carrier panel.

Advantageously, each one of said first latching elements is arcuate so as to match the acuate profile of a respective one of said first side walls, and wherein each one of said second latching elements comprises a chamfered surface configured to parallelly align with a side edge of the aperture when said housing is in said unlocked position.

Advantageously, said housing comprises a seal member provided at said bottom end portion and adapted to sealing engage with a top surface of the carrier panel when in said locked position.

Preferably, said first valve member is a breather valve comprising a membrane configured for bi-directional fluid flow at a predetermined first differential pressure between said bottom end portion and said top end portion, and wherein said second valve member is a degassing valve comprising an umbrella membrane configured for one-directional fluid flow at a second differential pressure between said bottom end portion and said top end portion in a direction from said bottom end portion to said top end portion.

Advantageously, the rotational movement of said housing relative to the carrier panel between said unlocked position and said locked position is in an angular range between 15 and 60 degrees. Preferably, the rotational movement of said housing relative to the carrier panel between said unlocked position and said locked position is in an angular range between 25 and 45 degrees. Even more preferably, the rotational movement of said housing relative to the carrier panel between said unlocked position and said locked position is approximately 30 degrees.

### Brief Description of Drawings

Example embodiment(s) of the invention are illustrated in the accompanying drawings, in which:
**Figure 1** shows an illustration of an example embodiment of the valve assembly of the present invention installed to a carrier panel (a) in a perspective top view, (b) in a side view, (c) in a top view and (d) in a front view;
**Figure 2** shows (a) a perspective top view of an illustration of an example embodiment of the valve assembly removed from the carrier panel, and (b) a top view of (a portion of) the carrier panel and an aperture suitably shaped for demountably coupling with the valve assembly;
**Figure 3** shows cross sectional views of the installed valve assembly (a) along sectional plane A-A, (b) along sectional plane B-B, and (c) along sectional C-C shown in Figure 1;
**Figure 4** shows a schematic illustration of the valve assembly during installation to a carrier panel (a) in a locked position, with arrows showing locking / unlocking movement, (b) a bottom view of the installed valve assembly showing the latching elements in the unlocked and locked position, arrows indicate direction of rotational movement, and (c) a bottom view of the valve assembly in the locked position;
**Figure 5** is a close-up illustration of the "locked" first latching element (snap-fit) (a) in a perspective side view, and (b) in a perspective bottom view, and
**Figure 6** is a close-up illustration of the second latching element, (a) in a perspective bottom-rear view ("locked"), (b) in a side-view, (c) in a front-profile view (showing the chamfer of the contact element), and (d) in a bottom view (showing the side-chamfer of the contact element).

### Description

The described example embodiment(s) relates to a valve assembly, and in particular to a valve assembly including a breathing and a degassing valve for BEVs.

Certain terminology is used in the following description for convenience only and is not limiting. The words 'right', `left', 'lower', 'upper', 'front', 'rear', 'upward', 'down', 'downward', 'above', 'below' designate directions in the drawings to which reference is made and are with respect to the described component when assembled and mounted (e.g. *in situ*)*.* The terms 'inner', 'inwardly' and 'outer', 'outwardly' refer to directions toward and away from a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as indirect connections between members in which one or more other members are interposed therebetween. The terminology includes the words specifically mentioned above, derivatives thereof, and words of similar import.

In the context of the present invention, the terms carrier panel, panel, carrier, battery housing are used interchangeably.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner.

Through the description and claims of this specification, the terms 'comprise' and 'contain', and variations thereof, are interpreted to mean 'including but not limited to', and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality, as well as, singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract or drawings), or to any novel one, or any novel combination, of the steps of any method or process so disclosed.

Although the example described is aimed to valve assemblies housing two parallelly arranged valve members for a BEV, the invention may equally used with housed valve assemblies for other applications including any number of valve members.

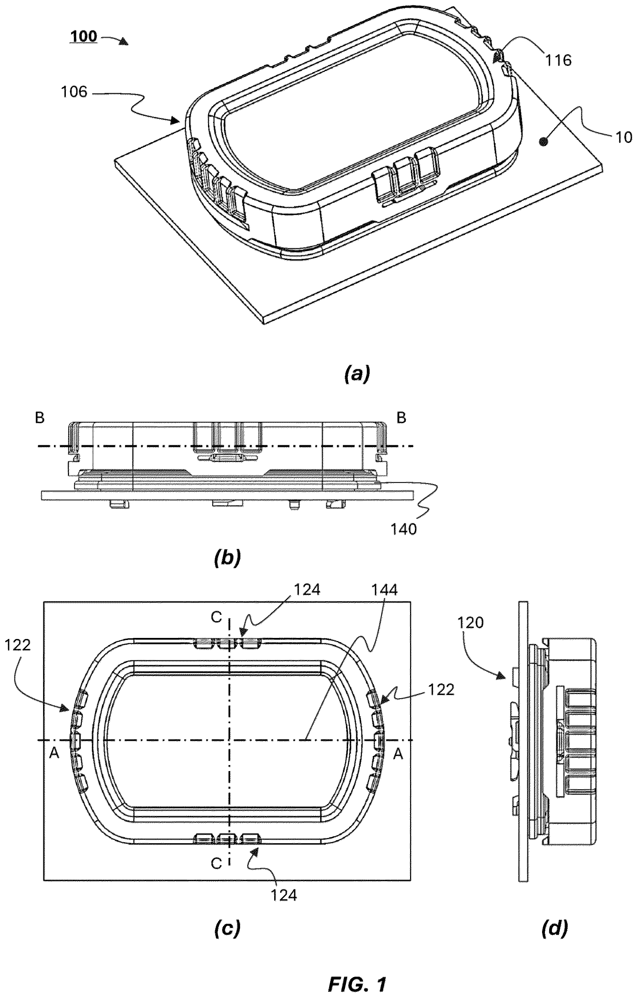

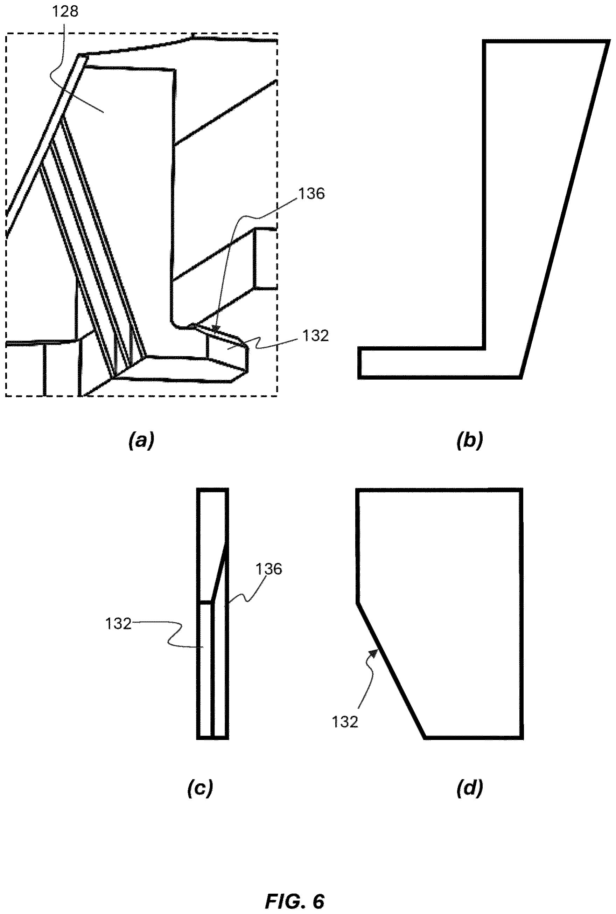

An example embodiment of the valve assembly 100 is now described with reference to Figures 1 to 6.

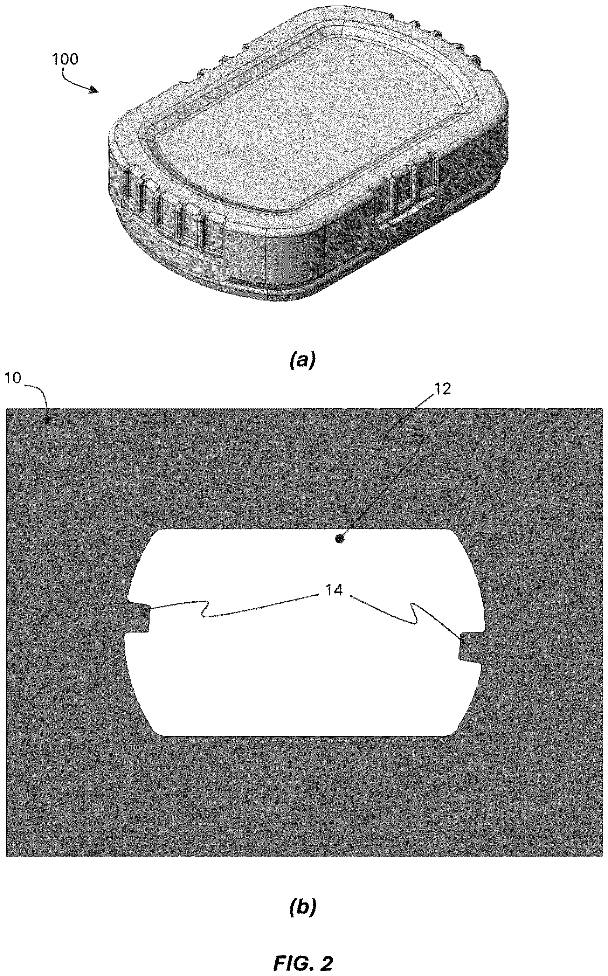

Referring now to Figure 1 and 2, the valve assembly 100 comprises a housing 106 including a substantially tubular wall structure 108 configured to enclose two parallelly arranged valve members 102, 104, i.e. a breather valve 102 and a degassing valve 104 between an open top end portion 110 and an open bottom end portion 112. Ideally, the wall structure 108 is shaped and dimensioned so as to minimise the interior space of the housing 106 needed to receive and operably retain and align the two valve members 102, 104. For example, the housing 106 and annular wall structure 108 are configured to provide an oblong shape formed from two opposing first side walls 122 and two opposing second side walls 124. Each one of the opposing first side walls 122 are of an arcuate shape with a centre coaxial with the centre axis 114 of the housing 106. Each one of the opposing second side walls 124 are straight walls connecting the ends of respective first opposing walls 124 and extending in a direction substantially perpendicular to the first side walls 122. In this example, the first side walls 122 are shorter in length than the second side walls 124 (oblong foot print).

The shape and profile of the housing 106 is configured to operably match the shape of an aperture 12 provided in the carrier panel 10 of the battery. I.e. the footprint of the housing 106 is slightly larger than the footprint of the aperture 12 so that the tubular wall structure 108 contactingly engages with an upper surface of the carrier panel 10, while the fastener member 120 of the valve assembly is able to pass through the aperture, when the housing 106 is placed (i.e. coaxial centre axes) over the aperture 12 and moved coaxially with and towards the aperture 12.

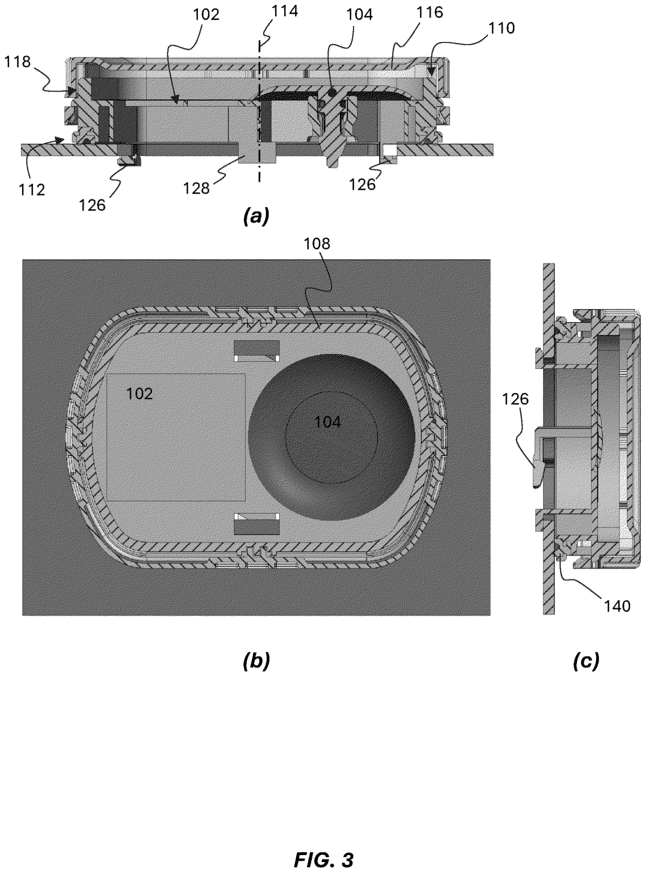

As shown in Figure 3(a), a inner support structure 130 is provided within the housing 106 between the top and bottom end portions 110, 112, that is adapted to retain the first and second valve member 102, 104. In particular, the support structure 130 is adapted to arrange the two valve members 102, 104 in a parallel and adjacent configuration and in a normal orientation of the fluid flow between the top and bottom end portions 110, 112, i.e. fluid passes from the bottom end portion 112 to the top end portion 110 (and vice versa) through the first and/or second valve member 102, 104 in a direction normal to the valve members 102, 104. An exposing cross sectional top view in Figure 3(b) shows the arrangement of the first and second valve member 102, 104 within the housing 106. Figure 3(c) provides for a cross sectional side view through the housing 106 of the valve assembly 100.

A cover member or lid 116 is provided at the top end portion 110 of the housing 106 so as to cover first and second valve member 102, 104, while providing at least one fluid passage 118 from inside the housing 106 to the outside. A seal 140 is provided at the bottom end portion 112 of the housing 106 that is adapted to sealingly engage with a top surface of the carrier panel 10 when the valve assembly 100 is lockingly attached to the carrier panel 10 through its aperture 12. The cover or lid 116 may be removably mountable to the top end portion 110, e.g. via a typical snap-fit mechanism, or any other suitable fastener mechanism. Alternatively, the cover member 116 may be permanently affixed to the housing 106 (e.g. adhesives, or during injection moulding). Furthermore, the cover member 116 may be encased in a seal, adapted to sealingly engage with the wall structure 108, while providing for at least one fluid passage 118.

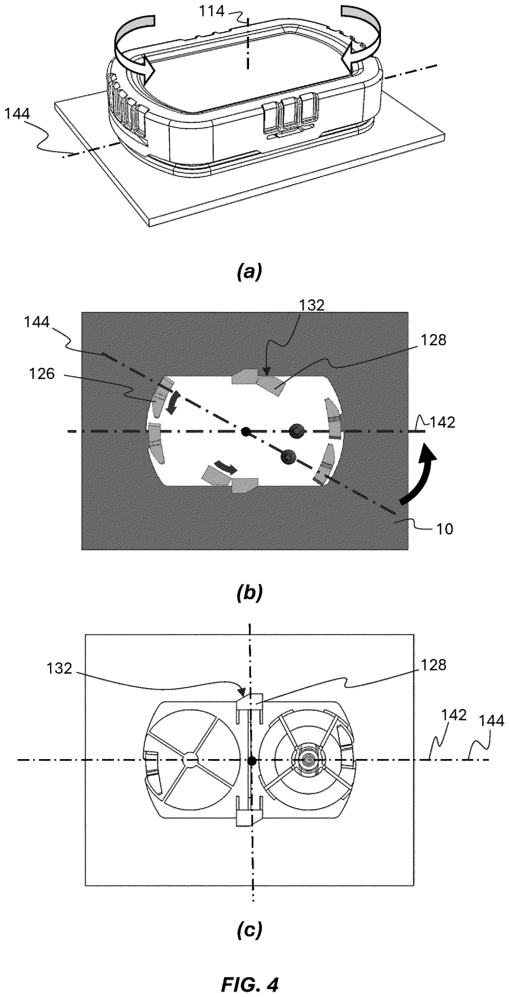

Referring now to Figures 4, 5 and 6, in particular, the fastener member 120 of the example embodiment of the valve assembly 100 is provided by a twist lock mechanism. The twist-lock mechanism is configured to cooperate with the aperture 12 of the carrier panel 10. In particular, the fastener member 120 is configured to operably engage with respective aperture side edges of the carrier panel 10 and lugs 14 protruding from two opposing aperture side edges towards the centre of the aperture 12.

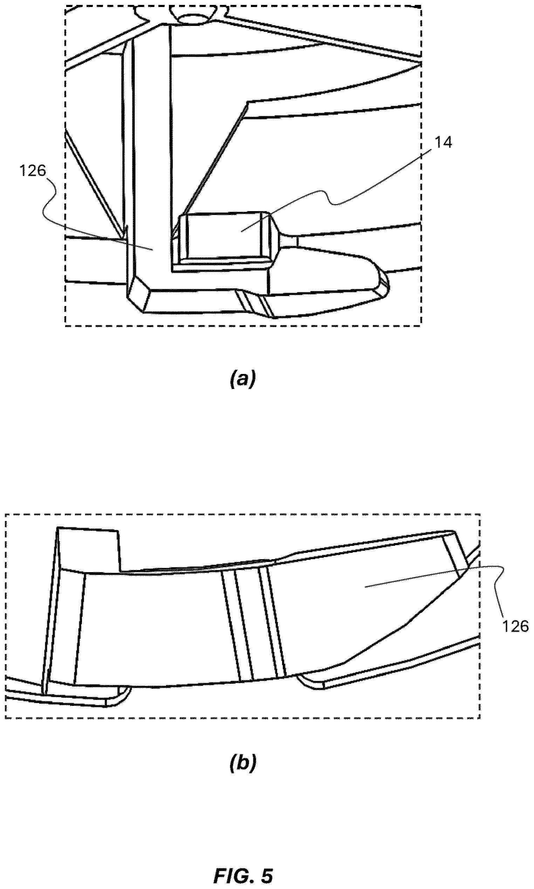

In this particular example embodiment, the fastener member 120 comprises a pair of first latching elements 126 extending away from a centre portion of respective first side walls 122, and a pair of second latching elements extending away from the support structure in the vicinity of a centre portion of respective second side walls 124. The first latching elements 122 are snap-fit latches (cantilever) as known in the art, spaced apart form the bottom end portion 112 so as to allow locking engagement with respective lugs 14 during use. The second latching elements 124 are abutment elements spaced apart form the bottom end portion 112 so as to allow locking engagement with a bottom surface of the carrier panel 10, during use. Each one of the snap-fit latches 126 is made of a resilient material adapted to deflect upon engagement and snap into locking engagement with the lug 14 (see Figure 5(a)). Furthermore, the snap-fit latches 126 are arcuate matching the profile of the first side walls (and respective aperture section), so that the first latching elements 126 pass easily through the aperture 12 during installation. Each one of the abutment elements 124 are made of a substantially rigid material (preventing deflection) and are configured to slidingly move into contact engagement with the bottom surface of the carrier panel 10 during installation. The contact portion of the abutment element 124 is provided with at least one chamfered edge 132 that can be parallelly aligned with a side surface of the aperture 12 during installation (i.e. when moving the housing 106 into the aperture 12 in an unlocked position). The contact portion may comprise a second chamfered edge 136 so as to provide a cam surface for the aperture edge when moving the second latching element 124 into contact engagement with the carrier panel 10.

During use, the fastener member 120 of the valve assembly 100 is moved coaxial with a centre axis of the aperture 12 toward and into the aperture 12 at an angular offset between a longitudinal axis 144 the housing 106 and a respective longitudinal axis 142 of the aperture 12 of approximately 30° (degrees), such that the snap-fit latches 126 and the abutment elements 128 can pass freely through the aperture 12. In this unlocked position the snap-fit latches 126 are moved away from the lugs 14, and the chamfered edge 132 of the abutment element 128 is parallelly aligned with the side edge surface if the aperture 12, thus allowing the first and second latching elements 126, 128 to pass through the aperture 12.

When the bottom end portion 112 (and seal 140) contactingly engages with the top surface of the carrier panel 10, the housing 106 can be rotated into alignment with the aperture 12, i.e. the longitudinal axis 144 of the housing 106 is rotatably aligned with the longitudinal axis 142 of the aperture 12. In this position, the fastener member 120 has lockingly engaged with the carrier panel 10, i.e. the first and second latching elements 126, 128 have moved into locking engagement with respective lugs 14 and the bottom surface of the carrier panel 10. The first and second latching elements 126, 128 are further configured to tighteningly pull the bottom end portion 112 towards the upper surface of the carrier panel 10 when installed. The seal 140 may be configured (e.g. elastic) to provide a bias between the housing and the carrier panel 10 during installation (i.e. when locked).

In order to remove the valve assembly 100 from the carrier panel 10, the housing 106 is simple rotated back into its unlocked position, i.e. the longitudinal axis 144 of the housing is now angularly offset from the longitudinal axis 142 of the aperture 12, allowing the fastener member 120 and housing 106 to be moved out of the aperture 12.

It is understood by the person skilled in the art, that the angular offset between the longitudinal axis 142 of the aperture 12 and the longitudinal axis 144 of the housing functions as a visual indicator, clearly showing that the valve assembly 100 is locked or unlocked within the aperture 12.

Further, the valve assembly 100 may be made from any suitable material, such as, for example a polymer material and may be manufactured by means of injection moulding, and in particular, a 2-component (2k) injection moulding process. It is understood by the person skilled in the art that any other multi-component injection moulding process, or other suitable manufacturing process, may be used to manufacture the valve assembly of the present invention.

In operation (i.e. when installed with a BEV battery), the first valve member 102 is adapted to provide pressure equalisation (bidirectional "breathing") so as to maintain a pressure balance within the battery enclosure (e.g. due to environmental or elevation changes) at a relatively low differential pressure. The second valve member 104 is adapted to relief overpressure within the battery, e.g. in an emergency where excess heat and pressure needs to be relieved very quickly.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible, for example, variations may exist in shape, size, arrangement, assembly or the like.

### Reference Numbers:

- 10: carrier panel
- 12: aperture
- 14: lug
- 100: valve assembly
- 102: first valve member
- 104: second valve member
- 106: housing
- 108: tubular wall structure
- 110: top end portion
- 112: bottom end portion
- 114: center axis
- 116: cover member, lid
- 118: fluid passage
- 120: fastener member
- 122: first side walls
- 124: second side walls
- 126: first latching elements
- 128: second latching elements
- 130: inner support member
- 132: first chamfered surface
- 136: second chamfered surface
- 140: seal member
- 142: longitudinal axis aperture
- 144: longitudinal axis housing

## Claims

1. A valve assembly for an BEV, comprising:
a first valve member and a second valve member;
a housing, comprising a (substantially) tubular wall structure extending between an open top end portion and an open bottom end portion along a central axis, configured to operably retainingly receive said first and second valve member in an adjacent and parallel arrangement between said top end portion and said bottom end portion;
a cover member, operably mountable to said top end portion, configured to cover said first valve member and said second valve member and provide at least one fluid passage through said open top end portion;
a fastener member, provided at said bottom end portion, configured to demountably fasten said housing to a carrier panel through an aperture of the carrier panel.

2. A valve assembly according to any one of the preceding claims, wherein said tubular wall structure comprises a pair of opposing first side walls and a pair of opposing second side walls arranged so as to form an oblong tubular cross-section adapted to enclose said first and second valve member.

3. A valve assembly according to claim 2, wherein said oblong tubular cross section is correspondingly formed to the shape of the aperture of the carrier panel.

4. A valve assembly according to any one of claims 2 and 3, wherein each one of said opposing first side walls is arcuate about said centre axis of said housing.

5. A valve assembly according to any one of claims 2 to 4, wherein said fastener member comprises a twist-lock mechanism, configured to lockingly engage with the carrier panel through the aperture.

6. A valve assembly according to any one of claims 5, wherein said fastener assembly comprises a pair of first latching elements protruding from an inner surface of a respective one of said pair of first side walls towards and past said bottom end portion, each one of said pair of first latching elements is adapted to contactingly engage with a bottom surface of a respective lug element protruding into the aperture of the carrier panel, during use.

7. A valve assembly according to claim 6, wherein said fastener assembly further comprises a pair of second latching elements, protruding from an inner support member that is provided between said top end portion and said bottom end portion and that is adapted to mountingly retain said first and second valve member, each one of said pair of second latching elements is adapted to contactingly engage with a bottom surface of said carrier panel, during use.

8. A valve assembly according to claim 7, wherein each one of said pair of second latching elements is arranged substantially central to and spaced apart from a respective one of said pair of opposing second side walls.

9. A valve assembly according to any one of claims 6 to 8, wherein, when inserted through the aperture, said fastener member is adapted to rotatably move about said centre axis between an unlocked position, where said first and second latching elements are mountably disengaged from the carrier panel, and a locked position, where said first and second latching elements are mountably engaged with the carrier panel.

10. A valve assembly according to claim 9, wherein said pair of first latching elements and said pair of second latching elements are configured to simultaneously engage with said lug elements and the bottom surface of the carrier panel, respectively, when moving from said unlocked position into said locked position.

11. A valve assembly according to any one of claims 6 to 10, wherein each one of said first latching elements is a resilient snap-fit latch configured to matingly engage with the respective lug element of the carrier panel, and wherein each one of said second latching elements is an abutment element configured to slidingly move into contact engagement with the bottom surface of the carrier panel.

12. A valve assembly according to any one of claims 6 to 11, wherein each one of said first latching elements is arcuate so as to match the acuate profile of a respective one of said first side walls, and wherein each one of said second latching elements comprises at least one chamfered surface configured to parallelly align with a side edge of the aperture when said housing is in said unlocked position.

13. A valve assembly according to any one of the preceding claims, wherein said housing comprises a seal member provided at said bottom end portion and adapted to sealing engage with a top surface of the carrier panel when in said locked position.

14. A valve assembly according to any one of the preceding claims, wherein said first valve member is a breather valve comprising a membrane configured for bi-directional fluid flow at a predetermined first differential pressure between said bottom end portion and said top end portion, and wherein said second valve member is a degassing valve comprising an umbrella membrane configured for one-directional fluid flow at a second differential pressure between said bottom end portion and said top end portion in a direction from said bottom end portion to said top end portion.

15. A valve assembly according to any one of claims 9 to 14, wherein the rotational movement of said housing relative to the carrier panel between said unlocked position and said locked position is in an angular range between 15 and 60 degrees.
